# EUROPEAN PATENT APPLICATION

(11) **EP 4 766 027 A1**
(43) Date of publication of application: **24.06.2026**
(21) Application number: 24221060.7
(22) Date of filing: 18.12.2024
(51) Int. Cl.: H05B 47/115, H05B 47/105, H05B 47/16

(54) **A MANAGEMENT SYSTEM AND A METHOD FOR CONTROLLING LUMINAIRES**

(71) Applicant: Helvar Oy Ab, 02150 Espoo (FI)
(72) Inventor: JUSLÉN, Henri, 02150 Espoo (FI); HELLSTRÖM, Lars, 02150 Espoo (FI)
(74) Representative: Väänänen, Janne Kalervo

(57) **Abstract**

A management system for controlling luminaires (109-112) comprises a presence sensor (101, 102) for producing occupancy data indicative of presence of an object on an area illuminated by the luminaires. The management system comprises a control system (106) for controlling the luminaires based on the occupancy data, and a signaling device (107) for generating a signal noticeable by an object on the area. The control system deactivates or dims down the luminaires when the occupancy data indicates that the area has been unoccupied for a delay time, and to control the signaling device to generate the signal when the occupancy data indicates that the area has become unoccupied. If the area is falsely detected to be unoccupied, the signal typically makes an object to react and the presence of the object can be detected based on the reaction, and unwanted deactivation or dimming down of the luminaires can be avoided.

## Description

### Field of the disclosure

The disclosure relates generally to illuminating engineering. More particularly, the disclosure relates to a management system for controlling one or more luminaires. Furthermore, the disclosure relates to a method and to a data processor program for controlling one or more luminaires.

### Background

Many lighting systems comprise luminaires for illuminating an area, e.g. an office or a restroom, and a control system that is configured to control the luminaires in accordance with one or more signals produced by one or more presence sensors such as passive infrared "PIR" sensors. However, a presence sensor may fail to detect a person or another object who is substantially stationary for a longer period of time, and therefore luminaires may be deactivated, i.e. turned off, or dimmed down despite the presence of the person or the other object. This can be very annoying for example in cases where the area to be illuminated is a restroom. In some other cases the undesired deactivation or dimming down of lights can be even dangerous, especially if there is no external light entering the area.

A straightforward approach to overcoming the above-described problem is to use large safety margins. In other words, luminaires are deactivated or dimmed down only after a rather long delay after a most recent detection of a person or another object on an area to be illuminated with these luminaires. The delay can be for example from 5 to 10 minutes. However, this means that the luminaires consume energy unnecessarily during the delay, which can be in some cases long compared to a typical duration of visits to the area to be illuminated with the luminaires. Therefore, there is a need for systems and methods for controlling luminaires so that the need for long delays of the kind mentioned above can be avoided or at least reduced in cases where an area to be illuminated can be falsely detected to be empty.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments.

In accordance with the invention, there is provided a new management system for controlling one or more luminaires. The management system comprises:
- one or more presence sensors configured to produce occupancy data indicative of presence of one or more objects on an area illuminated by the one or more luminaires,
- a control system configured to control the one or more luminaires based on the occupancy data, and
- a signaling device configured to generate a signal, e.g. a voice and/or light signal, noticeable by the one or more objects on the area.

The control system is configured to deactivate or dim down the one or more luminaires in response to a situation in which the occupancy data indicates that the area has been unoccupied for a delay time. Furthermore, the control system is configured to control the signaling device to generate the above-mentioned signal prior to an end of the delay time in response to a situation in which the occupancy data indicates that the area has become unoccupied and thus the delay time has started to elapse.

If the above-mentioned area is falsely detected to be unoccupied, the above-mentioned signal typically makes an object, e.g. a person, to react e.g. by a movement and the presence of the object can be detected based on the reaction prior to the above-mentioned delay time has elapsed. Thus, an unwanted deactivation or dimming down of the luminaires can be avoided. Furthermore, the object is disturbed by the signal only when the area is falsely detected to be unoccupied. When the area is correctly detected to be unoccupied, the signal does not disturb anybody.

In accordance with the invention, there is also provided a new lighting system that comprises:
- one or more luminaires, and
- a management system according to the invention and configured to control the one or more luminaires.

In accordance with the invention, there is also provided a new method for controlling one or more luminaires. The method comprises:
- receiving, from one or more presence sensors, occupancy data indicative of presence of one or more objects on an area illuminated by the one or more luminaires, and
- controlling the one or more luminaires based on the occupancy data.

The controlling the one or more luminaires based on the occupancy data comprises deactivating or dimming down the one or more luminaires in response to a situation in which the occupancy data indicates that the area has been unoccupied for a delay time. Furthermore, the method comprises generating, prior to an end of the delay time, a signal noticeable by the one or more objects on the area in response to a situation in which the occupancy data indicates that the area has become unoccupied and thus the delay time has started to elapse.

In accordance with the invention, there is also provided a new data processor program for controlling one or more luminaires. The data processor program comprises instructions for controlling a programmable data processor system to:
- receive, from one or more presence sensors, occupancy data indicative of presence of one or more objects on an area illuminated by the one or more luminaires, and
- control the one or more luminaires based on the occupancy data.

The data processor executable instructions for controlling the one or more luminaires based on the occupancy data comprise data processor executable instructions for controlling the programmable data processor system to deactivate or dim down the one or more luminaires in response to a situation in which the occupancy data indicates that the area has been unoccupied for a delay time. Furthermore, the data processor program comprises data processor executable instructions for controlling the programmable data processor system to control a signaling device to generate, prior to an end of the delay time, a signal noticeable by the one or more objects on the area in response to a situation in which the occupancy data indicates that the area has become unoccupied and thus the delay time has started to elapse.

The above-mentioned data processor program can be called a computer program provided that a computer is understood in a broad sense so that e.g. a programmable controller or another programmable device is deemed to be a computer.

In accordance with the invention, there is also provided a new data processor program product. The data processor program product comprises a non-volatile data processor readable medium encoded with a data processor program according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

Furthermore, it is to be understood that the use of "a" or "an", i.e. a singular form, throughout this document does not exclude a plurality.

The features recited in dependent claims are mutually freely combinable unless otherwise explicitly stated.

### Brief description of the figures

Exemplifying and non-limiting embodiments and their advantages are explained in greater detail below with reference to the accompanying drawings, in which:
figure 1 illustrates a lighting system according to an exemplifying and non-limiting embodiment,
figure 2 illustrates a lighting system according to an exemplifying and non-limiting embodiment, and
figure 3 shows a flowchart of a method according to an exemplifying and non-limiting embodiment for controlling one or more luminaires.

### Description of exemplifying and non-limiting embodiments

The specific examples provided in the description below should not be construed as limiting the scope and/or the applicability of the invention. Lists and groups of examples provided in the description below are not exhaustive unless otherwise explicitly stated.

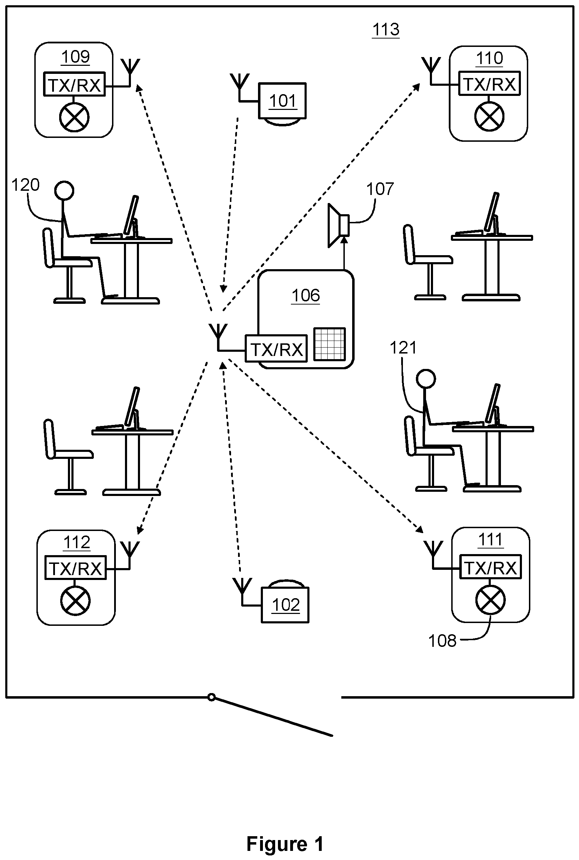

Figure 1 illustrates a lighting system according to an exemplifying and non-limiting embodiment. The lighting system comprises luminaires 109, 110, 111, and 112. In this exemplifying case, an area 113 to be illuminated with the luminaires 109-112 is a space like an office. The lighting system comprises a management system according to an exemplifying and non-limiting embodiment for controlling the luminaires 109-112. Furthermore, the luminaires 109-112 can be manually controlled with means of control, such as e.g. switches. The management system comprises presence sensors 101 and 102 configured to produce occupancy data indicative of presence of one or more objects on the area 113 illuminated by the luminaires 109-112. Each of the presence sensors 101 and 102 may comprise a passive infrared "PIR" sensor for detecting presence through motion, a thermal camera, an optical camera, a radar, and/or an air pressure sensor. In this exemplifying case related to the office environment, an object whose presence is monitored is typically a human-being who can be an office worker, a guard, a cleaner, or another type of person being in the office. In the exemplifying situation shown in figure 1, office workers 120 and 121 represent objects whose presence is monitored.

The management system comprises a signaling device 107 configured to generate a signal noticeable by objects whose presence is monitored, e.g. the office workers 120 and 121. In this exemplifying case, the signaling device 107 is a speaker element configured to generate a voice signal audible by the office workers 120 and 121. It is also possible that the signaling device comprises, instead of or in addition to the speaker element, one or more light emitting elements configured to generate a light signal that can be e.g. a flash of light and/or a temporary change in the color temperature of light. Therefore, the signaling device may comprise for example one or more light emitting elements of the luminaires 109-112, or there can be separate light emitting elements for the signaling purpose. In figure 1, the light emitting elements the luminaire111 are denoted with a reference 108. It is also possible that the signaling device comprises, in addition to or instead of the above-mentioned means, one or more blowers for generating one or more air flows noticeable by objects whose presence is monitored, e.g. the office workers 120 and 121. The word "blower" is to be understood broadly as a device for generating any kind of air flow, e.g. a single air flow pulse or a sequence of air flow pulses or a smooth air flow, etc.

The management system comprises a control system 106 that is configured to control the luminaires109-112 based on the above-mentioned occupancy data. The control system 106 is configured to deactivate or dim down the luminaires 109-112 in response to a situation in which the occupancy data indicates that the area 113 has been unoccupied for a predetermined delay time e.g. 1-5 minutes. The control system 106 is configured to control the signaling device 107 to generate, prior to an end of the delay time, the signal noticeable by the objects in response to a situation in which the occupancy data indicates that the space has become unoccupied and thus the delay time has started to elapse. For example, the control system 106 can be configured to control the signaling device 107 to generate the signal in response to a situation in which the occupancy data indicates that the area 113 has been unoccupied for a notice time, e.g. 30 seconds, that is shorter than the above-mentioned delay time. If the area 113 is falsely detected to be unoccupied, the above-mentioned signal typically makes an object, e.g. the office workers 120 and 121, to react e.g. by a movement and the presence of the object can be detected based on the reaction prior to the above-mentioned delay time has elapsed. Thus, an unwanted deactivation or dimming down of the luminaires 109-112 can be avoided. Furthermore, the object is disturbed by the signal only when the area 113 is falsely detected to be unoccupied. When the area 113 is correctly detected to be unoccupied, i.e. there are no people in the office, the above-mentioned signal does not disturb anybody. The signal noticeable by the objects is advantageously free from dimming down the luminaires as well as free from deactivating the luminaires, because signaling by dimming down or deactivating would disturb the objects in the same way as unwanted deactivation or dimming down of the luminaires.

In a management system according to an exemplifying and non-limiting embodiment, the control system 106 is configured to increase the above-mentioned delay time in response to a situation which the occupancy data indicates that the area 113 is occupied after generation of the signal. The occupancy detected after the generation of the signal indicates that the area 113 was falsely detected to be unoccupied, and therefore there might be a reason to increase the above-mentioned delay time. In a management system according to an exemplifying and non-limiting embodiment, the control system 106 is configured to decrease the delay time in response to a situation which the occupancy data indicates that the area 113 is unoccupied after the generation of the signal. The lack of detected occupancy after the generation of the signal indicates that the area 113 was correctly detected to be unoccupied, and therefore there might be a reason to decrease the above-mentioned delay time in order to decrease energy consumption.

In the exemplifying management system illustrated in figure 1, the control system 106 comprises a transceiver TX/RX for receiving signals from the presence sensors 101 and 102 and for transmitting lighting control data to control the luminaires 109-112. In the exemplifying case illustrated in figure 1, the control system 106 comprises a wireless transceiver. Wireless data transfer to and from the control system 106 can be based on e.g. the Bluetooth Low Energy "BLE" network technology, the Zigbee network technology, the Thread network technology, or some other suitable wireless data transfer technology. It is however also possible that the data transfer or a part of it is implemented with corded links. For example, a management system according to an exemplifying and non-limiting embodiment can be provided with a corded data transfer system that uses the Digital Addressable Lighting Interface "DALI" technology. In principle, the DALI technology is applicable in conjunction with wireless data transfer technologies, too. Figure 1 shows dashed line arrows depicting signals from the presence sensors 101 and 102 to the control system 102 and signals from the control system 106 to the luminaires 109-112. In some cases, there can be data network elements between the control system 106 and the presence sensors 101 and 102 and/or between the control system 106 and the luminaires 109-112. In exemplifying cases where the presence sensors 101 and 102 comprise cameras, it is advantageous that image data produced by the cameras is not delivered to any external data network, e.g. the Internet, to avoid data security risks since an electronic image may present e.g. recognizable faces of persons and/or some other non-public and confidential information.

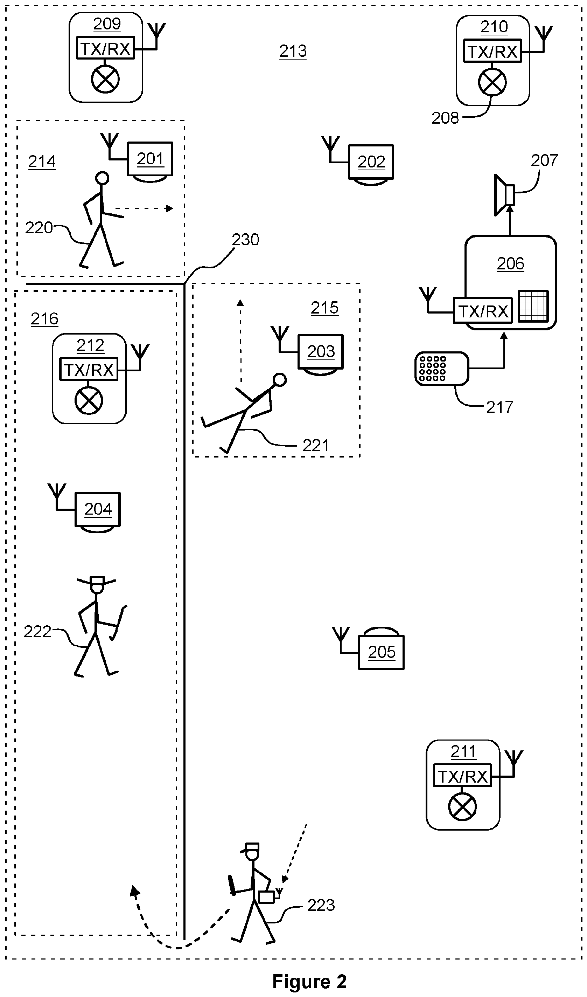

Figure 2 illustrates a lighting system according to an exemplifying and non-limiting embodiment. The lighting system comprises luminaires 209, 210, 211, and 212 for illuminating an area 213. In this exemplifying case, the area 213 comprises a sub-area 216 illuminated with the luminaire 212. The rest of the area 213 is illuminated with the luminaires 209-211. The lighting system comprises a management system according to an exemplifying and non-limiting embodiment for controlling the luminaires 209-212. Furthermore, the luminaires 209-212 can be manually controllable with control means such as e.g. switches. The management system comprises presence sensors 201, 202, 203, 204, and 205 configured to produce occupancy data indicative of presence of one or more objects on the area 213. The presence sensor 201 is configured to produce a data item being a part of the occupancy data and being indicative of presence of one or more objects in a place 214, the presence sensor 203 is configured to produce a data item being a part of the occupancy data and being indicative of presence of one or more objects in a place 215, and the presence sensor 204 is configured to produce a data item being a part of the occupancy data and being indicative of presence of one or more objects on the sub-area 216. The presence sensors 202 and 205 are configured to produce a data item being a part of the occupancy data and being indicative of presence of one or more objects on the rest of the area 213.

The management system comprises a signaling device 207 configured to generate a signal noticeable by objects, e.g. persons, whose presence is monitored. In this exemplifying case, the signaling device 207 is a speaker element configured to generate a voice signal. It is also possible that the signaling device comprises, instead of or in addition to the speaker element, one or more light emitting elements configured to generate a light signal that can be e.g. a flash of light and/or a temporary change in a color temperature of light. Therefore, the signaling device may comprise for example one or more light emitting elements of the luminaires 209-212, or there can be separate light emitting elements for the signaling purpose. It is also possible that the signaling device comprises, in addition to or instead of the above-mentioned means, one or more blowers for generating one or more air flows noticeable by objects whose presence is monitored.

The management system comprises a control system 206 that is configured to control the luminaires 209-212 based on the above-mentioned occupancy data. The control system 206 is configured to deactivate or dim down the luminaires 209-212 in response to a situation in which the occupancy data indicates that the area 213 has been unoccupied for a delay time e.g. 1-5 minutes. The control system 206 is configured to control the signaling device 207 to generate, prior to an end of the delay time, the signal noticeable by the objects in response to a situation in which the occupancy data indicates that the space has become unoccupied and thus the delay time has started to elapse. For example, the control system 206 can be configured to control the signaling device 207 to generate the signal in response to a situation in which the occupancy data indicates that the area 213 has been unoccupied for a notice time, e.g. 30 seconds, that is shorter than the above-mentioned delay time. If the area 213 is falsely detected to be unoccupied, the signal typically makes an object to react e.g. by a movement and the presence of the object can be detected based on the reaction prior to the above-mentioned delay time has elapsed. Thus, an unwanted deactivation or dimming down of the luminaires 209-212 can be avoided.

In a management system according to an exemplifying and non-limiting embodiment, one or more of the presence sensors 201-205 is/are configured to produce one or more data items being parts of the occupancy data and being indicative of presence of one or more objects in one or more places on the area 213, and the control system 206 is configured generate a notice signal in response to a situation in which the one or more data items indicate that the one or more places is/are occupied. In the exemplifying case illustrated in figure 2, the sub-area 216 can be a place allowed for authorized persons only. When the presence sensor 204 detects a suspicious person 222 on the sub-area 216, the control system 206 generates and transmits a notice signal to a receiver of a guard 223. Furthermore, in the exemplifying case illustrated in figure 2, the presence sensor 201 detects not only a presence of a person 220 in the place 214 but also a movement direction of the person 220. Correspondingly, the presence sensor 203 detects not only a presence of a person 221 in the place 215 but also a movement direction of the person 221. The control system 206 controls the signaling device 207 and/or the luminaires 209-211 to generate a voice notice and/or a light notice in a case of an imminent collision between the persons 220 and 221 approaching each other on different sides of a corner 230.

The above-mentioned occupancy data, possibly complemented with data indicative of a movement direction and/or a type of a detected object and/or with other suitable information, can be used for other functionalities, too. For example, automatic door opening can be based on the occupancy data complemented with data indicative of a movement direction, a warning for approaching a glass wall or a closed glass door can be based on the occupancy data complemented with data indicative of a movement direction, a warning that an area comprises both vehicles, e.g. cars, and pedestrians can be based on the occupancy data complemented with data indicative of types of detected objects, a warning about steps, stairs, or the like ahead can be based on the occupancy data complemented with data indicative of a movement direction, a voice and/or a light signal reminding to flush a toilet can be based on the occupancy data complemented with sound sensor data indicative of a lack of a flushing sound, a voice and/or a light signal reminding to close a water tap can be based on the occupancy data complemented with sound sensor data indicative of a sound of water running from the water tap, a notice signal indicative of a person with special needs, e.g. a person using a wheelchair, can be based on the occupancy data complemented with data indicative of types of detected objects, a warning about a dangerous work on the area 213 can be based on the occupancy data complemented with data indicative of types of detected objects, e.g. workers on scaffolding or the like, workers doing welding work, etc., a warning about ultraviolet "UV" disinfection work on the area 213 can be based on the occupancy data complemented with information that UV disinfection has been planned to take place, an instruction to close a door and/or a window can be based on the occupancy data complemented with sound sensor data indicative that otherwise a sound, or noise, would be hearable outside, etc.

A management system according to an exemplifying and non-limiting embodiment comprises one or more environmental condition sensors for detecting one or more environmental conditions on the area 213. The environmental condition can be e.g. temperature, a concentration of volatile organic compounds "VOC" in air, a concentration of carbon dioxide "CO₂" in air, a concentration of carbon monoxide "CO" in air, etc. The control system 206 can be configured generate an environment notice signal in response to a situation in which the occupancy data indicates that the area 213 is occupied and one or more predefined environmental conditions is/are detected on the area 213, e.g. a too high concentration of carbon monoxide "CO" in air. The environment notice signal can be e.g. an instruction to close a window and/or a door when e.g. temperature on the area 213 is too low, or an instruction to open the window and/or the door when e.g. a concentration of CO₂ and/or VOCs is/are too high.

The control system 106 shown in figure 1 as well as the control system 206 shown in figure 2 can be implemented with one or more data processors each of which can be a programmable data processor provided with an appropriate software, a dedicated hardware data processor such as for example an application specific integrated circuit "ASIC", or a configurable hardware data processor such as for example a field programmable gate array "FPGA". Furthermore, the control system 106 shown in figure 1 as well as the control system 206 shown in figure 2 may comprise one or more memory devices such as e.g. a random-access memory "RAM" circuit.

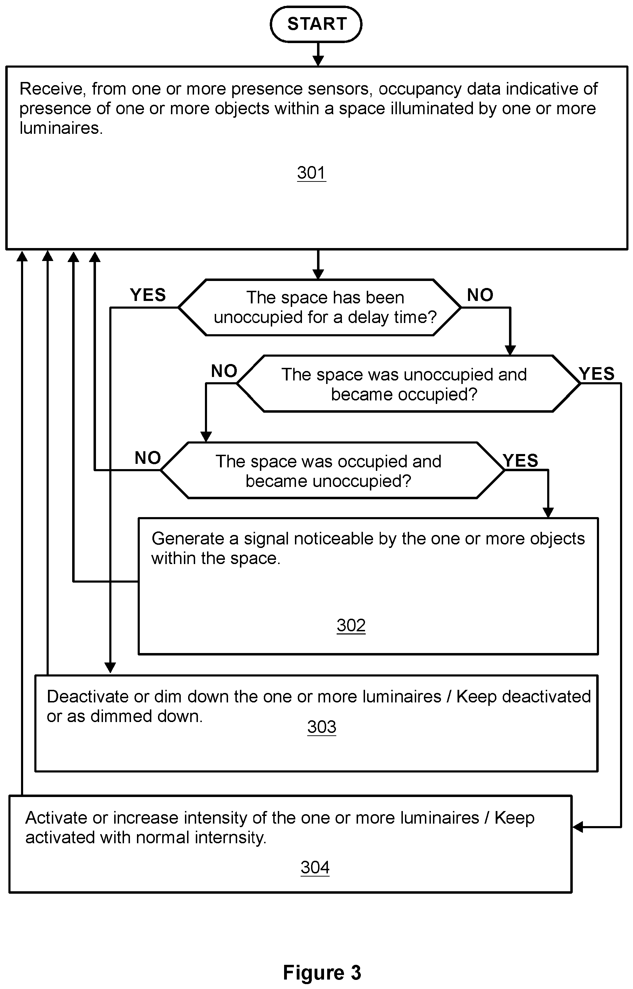

Figure 3 shows a flowchart of a method according to an exemplifying and non-limiting embodiment for controlling one or more luminaires. The method comprises the following actions:
- action 301: receiving, from one or more presence sensors, occupancy data indicative of presence of one or more objects on an area illuminated by the one or more luminaires,
- actions 303 and 304: controlling the one or more luminaires based on the occupancy data so that the controlling comprises deactivating or dimming down the one or more luminaires in response to a situation in which the occupancy data indicates that the area has been unoccupied for a delay time, and
- action 302: generating, prior to an end of the delay time, a signal noticeable by the one or more objects within the space in response to a situation in which the occupancy data indicates that the space has become unoccupied and thus the delay time has started to elapse.

In a method according to an exemplifying and non-limiting embodiment, the signal is generated in response to a situation in which the occupancy data indicates that the space has been unoccupied for a notice time shorter than the delay time.

A method according to an exemplifying and non-limiting embodiment comprises increasing the delay time in response to a situation which the occupancy data indicates that the space is occupied after generation of the signal.

A method according to an exemplifying and non-limiting embodiment comprises decreasing the delay time in response to a situation which the occupancy data indicates that the space is unoccupied after generation of the signal.

In a method according to an exemplifying and non-limiting embodiment, the signal comprises a voice signal and/or a light signal and/or an air flow.

In a method according to an exemplifying and non-limiting embodiment, one or more of the presence sensors produces/produce one or more data items being parts of the occupancy data and indicative of presence of the one or more objects in one or more places on the area, and the method comprises generating a notice signal in response to a situation in which the one or more data items indicate that the one or more places is/are occupied.

In a method according to an exemplifying and non-limiting embodiment, one or more environmental condition sensors detects/detect one or more environmental conditions on the area, and the method comprises generating an environment notice signal in response to a situation in which the occupancy data indicates that the area is occupied, and one or more predefined environmental conditions is/are detected on the area.

In a method according to an exemplifying and non-limiting embodiment, each of the one or more presence sensors comprises at least one of the following: a passive infrared sensor for detecting presence through motion, a thermal camera, an optical camera, a radar, and an air pressure sensor.

A data processor program according to an exemplifying and non-limiting embodiment comprises data processor executable instructions for controlling a programmable data processor system to carry out actions related to a method according to any of the above-described exemplifying embodiments.

A data processor program according to an exemplifying and non-limiting embodiment comprises software modules for controlling one or more luminaires. The software modules comprise data processor executable instructions for controlling a programmable data processor system to:
- receive, from one or more presence sensors, occupancy data indicative of presence of one or more objects on an area illuminated by the one or more luminaires, and
- control the one or more luminaires based on the occupancy data.

The data processor executable instructions for controlling the one or more luminaires based on the occupancy data comprise data processor executable instructions for controlling the programmable data processor system to deactivate or dim down the one or more luminaires in response to a situation in which the occupancy data indicates that the area has been unoccupied for a delay time. Furthermore, the software modules comprise data processor executable instructions for controlling the programmable data processor system to control a signaling device to generate, prior to an end of the delay time, a signal noticeable by the one or more objects on the area in response to a situation in which the occupancy data indicates that the area has become unoccupied and thus the delay time has started to elapse.

The above-mentioned software modules can be e.g. subroutines or functions implemented with a programming language suitable for the programmable data processor system.

A data processor program product according to an exemplifying and non-limiting embodiment comprises a data processor readable medium encoded with a data processor program according to an embodiment of invention.

A non-transitory processor readable medium according to an exemplifying and non-limiting embodiment is encoded with a data processor program according to an embodiment of invention.

A signal according to an exemplifying and non-limiting embodiment is encoded to carry information defining a data processor program according to an embodiment of invention.

The specific examples provided in the description given above should not be construed as limiting the scope and/or the applicability of the invention. Lists and groups of examples provided in the description given above are not exhaustive unless otherwise explicitly stated.

## Claims

1. A management system for controlling one or more luminaires, the management system comprising:
- one or more presence sensors (101, 102, 201-205) configured to produce occupancy data indicative of presence of one or more objects on an area illuminated by the one or more luminaires,
- a control system (106, 206) configured to control the one or more luminaires based on the occupancy data, and
- a signaling device (107, 108, 207) configured to generate a signal noticeable by the one or more objects on the area,
wherein the control system is configured to deactivate or dim down the one or more luminaires in response to a situation in which the occupancy data indicates that the area has been unoccupied for a delay time, **characterized in that** the control system is configured to control the signaling device to generate the signal prior to an end of the delay time in response to a situation in which the occupancy data indicates that the area has become unoccupied and the delay time has started to elapse.

2. A management system according to claim 1, wherein the control system is configured to control the signaling device to generate the signal in response to a situation in which the occupancy data indicates that the area has been unoccupied for a notice time shorter than the delay time.

3. A management system according to claim 1 or 2, wherein the signaling device comprises at least one of following: one or more speaker elements configured to generate a voice signal, one or more light emitting elements configured to generate a light signal, one or more blowers configured to generate one or more air flows noticeable by the one or more objects on the area.

4. A management system according to any one of claims 1-3, wherein the control system is configured to increase the delay time in response to a situation which the occupancy data indicates that the area is occupied after generation of the signal.

5. A management system according to any one of claims 1-4, wherein the control system is configured to decrease the delay time in response to a situation which the occupancy data indicates that the area is unoccupied after generation of the signal.

6. A management system according to any one of claims 1-5, wherein one or more (201, 203, 204) of the presence sensors is/are configured to produce one or more data items being parts of the occupancy data and indicative of presence of the one or more objects in one or more places on the area, and the control system is configured generate a notice signal in response to a situation in which the one or more data items indicate that the one or more places is/are occupied.

7. A management system according to any one of claims 1-6, wherein the management system comprises one or more environmental condition sensors (217) for detecting one or more environmental conditions on the area, and the control system is configured generate an environment notice signal in response to a situation in which the occupancy data indicates that the area is occupied and one or more predefined environmental conditions is/are detected on the area.

8. A management system according to any one of claims 1-7, wherein each of the one or more presence sensors comprises at least one of following: a passive infrared sensor for detecting presence through motion, a thermal camera, an optical camera, a radar, and an air pressure sensor.

9. A lighting system comprising:
- one or more luminaires (109-112, 209-212), and
- a management system according to any one of claims 1-8 and configured to control the one or more luminaires.

10. A method for controlling one or more luminaires, the method comprising:
- receiving (301), from one or more presence sensors, occupancy data indicative of presence of one or more objects on an area illuminated by the one or more luminaires, and
- controlling (303, 304) the one or more luminaires based on the occupancy data,
wherein the controlling the one or more luminaires based on the occupancy data comprises deactivating or dimming down (303) the one or more luminaires in response to a situation in which the occupancy data indicates that the area has been unoccupied for a delay time, **characterized in that** the method comprises generating (302), prior to an end of the delay time, a signal noticeable by the one or more objects on the area in response to a situation in which the occupancy data indicates that the area has become unoccupied and the delay time has started to elapse.

11. A method according to claim 10, wherein the signal is generated in response to a situation in which the occupancy data indicates that the area has been unoccupied for a notice time shorter than the delay time.

12. A method according to claim 10 or 11, wherein the method comprises increasing the delay time in response to a situation which the occupancy data indicates that the area is occupied after generation of the signal.

13. A method according to any one of claims 10-12, wherein the method comprises decreasing the delay time in response to a situation which the occupancy data indicates that the area is unoccupied after generation of the signal.

14. A method according to any one of claims 10-12, wherein the signal comprises at least one of following: a voice signal, a light signal, an air flow.

15. A data processor program for controlling one or more luminaires, the data processor program comprising data processor executable instructions for controlling a programmable data processor system to
- receive, from one or more presence sensors, occupancy data indicative of presence of one or more objects on an area illuminated by the one or more luminaires, and
- control the one or more luminaires based on the occupancy data,
wherein the data processor executable instructions for controlling the one or more luminaires based on the occupancy data comprise data processor executable instructions for controlling the programmable data processor system to deactivate or dim down the one or more luminaires in response to a situation in which the occupancy data indicates that the area has been unoccupied for a delay time, **characterized in that** the data processor program comprises data processor executable instructions for controlling the programmable data processor system to control a signaling device to generate, prior to an end of the delay time, a signal noticeable by the one or more objects on the area in response to a situation in which the occupancy data indicates that the area has become unoccupied and the delay time has started to elapse.
